# EUROPEAN PATENT SPECIFICATION

(11) **EP 3 143 183 B1**
(45) Date of publication and mention of the grant of the patent: **11.04.2018**
(21) Application number: 15729532.0
(22) Date of filing: 11.05.2015
(51) Int. Cl.: C23G 1/08, B01F 7/00, C09J 5/00, C23C 22/06, C23C 22/13

(54) **METHOD FOR MANUFACTURING A PROCESS APPARATUS AND A PROCESS APPARATUS**
VERFAHREN ZUR HERSTELLUNG EINER PROZESSVORRICHTUNG UND PROZESSVORRICHTUNG
PROCÉDÉ DE FABRICATION D'UN APPAREIL DE TRAITEMENT, ET APPAREIL DE TRAITEMENT

(30) Priority: 16.05.2014 FI 20145446
(43) Date of publication of application: 22.03.2017
(73) Proprietor: Outotec (Finland) Oy, 02230 Espoo (FI)
(72) Inventor: LINDGREN, Mari, FI-28430 Pori (FI); LAIHONEN, Paavo, FI-28220 Pori (FI)
(74) Representative: Papula Oy
(86) International application number: PCT/FI2015/050315
(87) International publication number: WO 2015/173469

(56) References cited:
- WO-A1-2008/082162
- WO-A1-2012/143118
- Anonymous: "Knowledge Center Surface Treatment, Polishing, & Coatings", , 10 February 2013 (2013-02-10), pages 1-3, XP055205161, Retrieved from the Internet: URL:https://web.archive.org/web/2013021007 1839/http://www.fusionfluid.com/FusionFlui dEquipmentLLC/html/kc_surface_treatments.h tml [retrieved on 2015-07-29]

## Description

### FIELD OF THE INVENTION

The invention relates to a method for manufacturing a process apparatus and a process apparatus.

### BACKGROUND OF THE INVENTION

Rubber linings are typically used for corrosion and wear protection in process apparatuses such as impellers. One possible solution for aggressive environments is a combination of superduplex stainless steel and bromobutyl rubber, in which the rubber material provides for wear protection. Under harsh conditions such as high temperature immersion, rubber linings are prone to failure due to loss of adhesion between the stainless steel and the rubber lining. This type of failure is often sudden and can cause substantial economical losses due to loss of production. Maintaining adhesion tends to become increasingly important if process conditions become more aggressive, as the loss of adhesion can immediately cause the loss of the underlying process apparatus by corrosion.

The adhesion between stainless steel and rubber lining is partly mechanical, assisted by surface roughness of the stainless steel, and partly chemical, typically created with the aid of so-called primers. A typical procedure to apply a rubber lining is to roughen the surface of the stainless steel by shot peening and to apply a first layer of primer immediately or within a few hours at the latest. The aim is to produce a clean, oxide-free surface for the primers, as it is believed that such a surface provides the best adhesion. Unfortunately process apparatuses lined according to such a procedure have been found to often suffer from loss of adhesion during prolonged exposure to harsh conditions.

Thus the need remains for improved methods that allow for manufacturing process apparatuses with improved adhesion and longer life span in harsh process conditions.

### SUMMARY OF THE INVENTION

The purpose of the present invention is to provide a new method for manufacturing a process apparatus for moving liquid in high temperature liquid immersion under an aggressive chemical environment and dynamic stress, in which highly improved adhesion between the stainless steel of the process apparatus and the rubber lining is achieved.

The invention discloses a method for manufacturing a process apparatus for moving liquid in high temperature liquid immersion under an aggressive chemical environment and dynamic stress, wherein the process apparatus is an impeller, agitator or mixer, and wherein the method comprises the step of lining a process apparatus formed of stainless steel with rubber, characterized in that the method comprises the steps of roughening a surface of the process apparatus to a roughness of at least 10 µm Rz; and forming a passivation layer on the roughened surface of the process apparatus in an acid bath prior to lining the process apparatus comprising the passivation layer with rubber. The process apparatus may be suitable for use in high temperature liquid immersion such as immersion in acidic solution, e.g. sulphuric acid solution. The dynamic stresses may be imposed by e.g. rotation. The process apparatus may be suitable for use in liquid immersion at a temperature of at least 70°C, or at least 80°C, or at least 90°C, or at least 95°C.

The process apparatus may be suitable for moving or forcing liquid. It may also be suitable for use in an environment where high dynamic or tensile forces such as fluid, shear, bending or compression forces or scratching, sliding or scrubbing are imposed on the process apparatus, or in an environment where the process apparatus moves or rotates in liquid.

The life expectancy of such a process apparatus is preferably at least one year, or at least two years.

The passivation layer may be formed on one or more surfaces of the process apparatus prior to one or more optional steps and the step of lining the process apparatus with rubber. Further, the passivation layer may be formed on a part of one or more surfaces of the process apparatus prior to one or more optional steps and lining the process apparatus with rubber. Thus the passivation layer or at least a part of the passivation layer is lined with rubber.

The rubber lining may be performed e.g. by applying a layer or sheet of rubber, for instance a layer or sheet 12-20 mm thick, on the process apparatus and by vulcanizing or curing. The conditions of the vulcanization process may be selected depending e.g. on the rubber and/or primer used. For instance, conventionally practiced vulcanization conditions at the temperatures of 120°-180°C may be used under a suitable pressure. A suitable pressure may be e.g. in the range of 1 - 20 bar, or in the range of 3 - 6 bar, for instance 5 bar. The vulcanization may be performed in an autoclave.

In an embodiment, the rubber is bonded to the stainless steel by vulcanizing or curing.

In an embodiment, a surface of the process apparatus is roughened prior to forming the passivation layer on the roughened surface of the process apparatus. The roughening may be performed using e.g. a suitable shot peening method. The roughening may improve adhesion of the rubber lining to the stainless steel. One or more surfaces of the process apparatus, or at least a part of one or more surfaces of the process apparatus, may be roughened.

In an embodiment, a surface of the process apparatus is roughened by shot peening prior to forming the passivation layer on the roughened surface of the process apparatus.

In an embodiment, a surface of the process apparatus is roughened to a roughness of at least 10 µm Rz, or at least 15 µm Rz, prior to forming the passivation layer on the roughened surface of the process apparatus. Rz should be understood as referring to the average distance between highest peaks and valleys.

In an embodiment, a surface of the process apparatus is roughened to a roughness of at least 20 µm Rz prior to forming the passivation layer on the roughened surface of the process apparatus. 20 µm Rz represents the normal level of roughness.

To improve bonding of rubber to stainless steel, a primer, an adhesive, or both may be applied on the passivation layer prior to lining the process apparatus. Suitable primer or adhesive may be selected e.g. so that it is suitable for the rubber and the curing or vulcanization method used. Typically, at least a primer is used. In this context, the term "primer" should be understood as referring to any primer or bonding agent suitable for bonding the rubber to stainless steel. In this context, the term "adhesive" should be understood as referring to any adhesion promoter suitable for promoting the adhesion of the rubber to stainless steel.

In an embodiment, a primer and/or an adhesive is applied on the passivation layer prior to lining the process apparatus comprising the passivation layer with rubber.

In an embodiment, a passivation layer as perfect as possible is formed on the surface of the process apparatus.

In an embodiment, the acid bath comprises an oxidizing acid. Suitable oxidizing acids are e.g. nitric acid and citric acid.

In an embodiment, the acid bath is a nitric acid bath.

The passivation layer may be formed in a bath of e.g. at least 15 % v/v, or at least 20% v/v, or up to 50% v/v, nitric acid. A nitric acid bath may also comprise sodium dichromate as an additive to promote oxidation. The passivation layer may be formed by immersion in the nitric acid bath for e.g. at least 20 minutes, or 20 - 30 minutes, or up to 2 h. The temperature of the nitric acid bath may be e.g. in the range of 20°C to 70°C. Nitric acid baths are very effective in forming the passivation layer.

In an embodiment, the acid bath is a citric acid bath.

The passivation layer may be formed in a bath of e.g. 4-10 % v/v citric acid. The passivation layer may be formed by immersion in the citric acid bath for e.g. at least 20 minutes, or at least 30 minutes. Citric acid is typically a milder acid bath and may be more environmentally friendly.

The process apparatus may be rinsed and dried after forming the passivation layer in the acid bath. The drying may be performed e.g. by blowing the process apparatus with compressed air or in a vacuum chamber, or both.

Possible rubbers for rubber lining are in principle any rubbers that may be bonded to metal, such as hard rubbers, butyl rubbers or synthetic rubbers. The requirements for chemical resistance and wear resistance govern the selection of the rubber type.

In an embodiment, the rubber is a rubber suitable for bonding to the stainless steel by vulcanizing or curing.

In an embodiment, the rubber is halobutyl rubber, such as chromobutyl or bromobutyl rubber.

In an embodiment, the rubber is bromobutyl rubber. Bromobutyl rubber is well suited for use in acidic conditions and high temperatures.

In principle, any stainless steel is suitable as the material of the process apparatus. Typically stainless steels contain at least 10.5 % chromium.

In an embodiment, the stainless steel is duplex stainless steel. Duplex stainless steels typically have a mixed microstructure of austenite and ferrite. Duplex grades include e.g. lean duplex, standard duplex, super duplex and hyper duplex stainless steel.

In an embodiment, the stainless steel is super duplex stainless steel. Super duplex stainless steels are duplex stainless steels with a Pitting Resistance Equivalent Number (PREN) >40, where PREN = %Cr + 3.3x(%Mo + 0.5x%W) + 16x%N. Usually super duplex grades, such as 2507, contain at least 25% chromium.

In an embodiment, the method comprises the steps of
roughening a surface of a process apparatus formed of stainless steel;
forming a passivation layer on the roughened surface of the process apparatus in an acid bath;
optionally applying one or more layers of a primer, one or more layers of an adhesive, or both on the passivation layer;
lining the process apparatus comprising the passivation layer with rubber; and
bonding the rubber by vulcanizing or curing.

In an embodiment, the process apparatus is an impeller, agitator or mixer.

The invention further relates to a process apparatus for moving liquid in high temperature liquid immersion under an aggressive chemical environment and dynamic stress, wherein the process apparatus is formed of stainless steel and comprises a passivation layer on the surface of the stainless steel and a rubber lining on the passivation layer.

The process apparatus may be suitable for use in high temperature liquid immersion such as immersion in acidic solution, e.g. sulphuric acid solution. The dynamic stresses may be imposed by e.g. rotation. The process apparatus may be suitable for use in liquid immersion at a temperature of at least 70°C, or at least 80°C, or at least 90°C, or at least 95°C.

The process apparatus may be suitable for moving or forcing liquid. It may also be suitable for use in an environment where high dynamic or tensile forces such as fluid, shear, bending or compression forces or scratching, sliding or scrubbing are imposed on the process apparatus, or in an environment where the process apparatus moves or rotates in liquid.

The passivation layer may be disposed on one or more surfaces of the stainless steel. Further, at least a part of the passivation layer may be lined with rubber. The surface of the process apparatus is roughened. In this context, the surface of the process apparatus should be understood as referring to the surface of the stainless steel. The passivation layer is disposed on the roughened surface of the stainless steel. One or more surfaces of the process apparatus, or at least a part of one or more surfaces of the process apparatus, may be roughened. The surface of the process apparatus is roughened to, i.e. has a roughness of, at least 10 µm Rz, or at least 15 µm Rz, or at least 20 µm Rz.

The rubber lining may be directly on the passivation layer, or one or more layers may be disposed between the passivation layer and the rubber lining.

For instance, in an embodiment, the process apparatus comprises a layer of a primer and/or a layer of an adhesive between the passivation layer and the rubber lining. The process apparatus may comprise one or more layers of a primer, one or more layers of an adhesive, or both.

Typically, the rubber lining is bonded to the steel. Primers and adhesives are added to assist in bonding the rubber lining to the steel.

Possible rubbers are in principle any rubbers that may be bonded to metal, such as hard rubbers, butyl rubbers or synthetic rubbers.

In an embodiment, the rubber is suitable for bonding to stainless steel by vulcanization or curing.

In an embodiment, the rubber is halobutyl rubber, such as chromobutyl or bromobutyl rubber.

In an embodiment, the rubber is bromobutyl rubber.

In principle, any stainless steel is suitable as the material from which the process apparatus is formed. In an embodiment, the stainless steel is duplex stainless steel. In an embodiment, the stainless steel is super duplex stainless steel.

In an embodiment, the process apparatus is an impeller, agitator or mixer.

The invention also relates to a process apparatus obtainable by the method according to one or more embodiments of the invention.

The invention provides a number of benefits. Surprisingly, the adhesion between the stainless steel and the rubber lining is dramatically improved by the formation of the passivation layer. Thus the lifetime of processing apparatuses can be significantly prolonged, and losses of production due to e.g. sudden failures of process apparatuses or time required to replace failed process apparatuses can be avoided. The process for manufacturing is simple, applicable to process apparatuses of various sizes and shapes and the costs involved low.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** **shows** an embodiment of the process apparatus; and
**Figure 2** illustrates a cross-section of the process apparatus shown in Figure 1.

### DETAILED DESCRIPTION

Reference will now be made in detail to the embodiments of the present invention, examples of which are illustrated in the accompanying drawings.

For reasons of simplicity, item numbers will be maintained in the following exemplary embodiments in the case of repeating components.

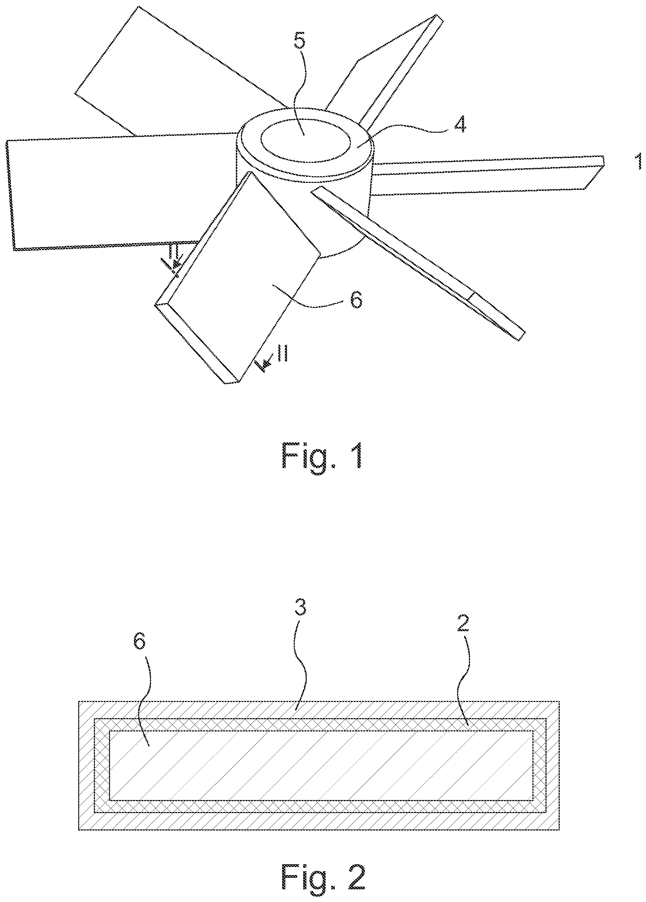

Figure 1 illustrates one embodiment of the process apparatus. In this embodiment, the process apparatus 1, formed of stainless steel, comprises a hub 4 comprising an opening 5 which may be connected to an axis. The process apparatus is rotatable about the axis for moving liquid in which it may be immersed. The process apparatus comprises a plurality of pitched blades 6 which extend outwardly from the hub 4; in general, the number, pitch and shape of blades may vary.

Figure 2 is a cross-section II-II of Figure 1. The blade 6 of the process apparatus 1 comprises a rubber lining 3 and a passivation layer 2 disposed between the blade 6 formed of stainless steel and the rubber lining 3. The passivation layer 2 is formed on the surface of the stainless steel. In this exemplary embodiment, the rubber lining 3 covers the entire surface of the passivation layer 2.

### EXAMPLES

### Comparative example

Steel slabs were cut from super 2507 duplex stainless steel (60x24.5 mm). The surface of the slabs was roughened and a primer lining was applied on the roughened surface immediately. The steel slabs were lined with three different primer combinations and with two layers of CEMENT TC 5000 adhesive. Two steel slabs were lined with each primer combination:
Sample 1: Chemosil 211 + Chemosil 411 (Hen-kel)
Sample 2: HG1 + HG2
Sample 3: PR500 + S500-2

The steel slabs lined with the primer combinations and the adhesive were rubber lined with Chemo-line 13 bromobutyl rubber (Rema TipTop) and vulcanized at 140°C for 4 h.

One steel slab of each of the samples 1-3 was immersed in sulphuric acid solution at 95°C for 1000 h in a 10 1 reactor, in which the rubber lined steel slabs were placed in a vertical position. The composition of the sulphuric acid solution was as follows:

| | |
|---|---|
| H₂SO₄ | 75 g/l |
| Fe | 45 g/l |
| Cu | 15 g/l |
| Cl⁻ | 650 mg/l |

The other steel slab of each of the samples 1-3 was not immersed. The adhesion of the rubber lining was tested by measuring the force required to rip the rubber lining off the steel slab. The results are shown in Table 1.

**Table 1. Tensile strength test results for samples that were not immersed in sulphuric acid solution and samples that were immersed in sulphuric acid solution. RH refers to adhesion strength in newtons per millimetre (maximum force FH divided by the width of the sample).**

| | | |
|---|---|---|
| | RH (N/mm²) | |

| Sample | No immersion | Immersion for 1000 h |
|---|---|---|
| 1 | 10.4 | 2.0 |
| 2 | 10.0 | 1.2 |
| 3 | 10.1 | 1.5 |

As expected, rubber lining on steel slabs that were not immersed in sulphuric acid solution adhered very well, and a force of at least 10 N/mm² was required to pull off the rubber lining. However, immersion for 1000 h in sulphuric acid solution at high temperature led to a significant decrease in adhesion, and a force of approx. 1.6 N/mm² on average was required to pull off the rubber lining. Small differences in adhesion were observed between different primers used.

### Example 1

Slabs of super duplex 2507 steel were roughened and passivated by immersing in a nitric acid bath containing 20% (v/v) HNO₃ for 30 min at 25°C, then rinsed and dried with compressed air blow and in a vacuum chamber. A rubber lining was applied on the passivated surface of the steel slabs in a similar manner as in the comparative example. The rubber lined samples were immersed in the sulphuric acid solution for 1000 h either at room temperature (samples 1-2) or at 95°C (samples 3-6). Tensile strength measurement results are shown in Table 2.

**Table 2. Tensile strength test results for passivated samples that were immersed in sulphuric acid solution at room temperature (samples 1 and 2) and samples that were immersed in sulphuric acid solution at 95°C (samples 3-6). FH refers to the maximum force required to cause separation of the rubber lining.**

| Sample | FH (N) | RH (N/mm²) |
|---|---|---|
| 1 | 211.53 | 8.46 |
| 2 | 223.15 | 8.93 |
| 3 | 217.40 | 8.70 |
| 4 | 216.68 | 8.67 |
| 5 | 231.65 | 9.27 |
| 6 | 196.32 | 7.85 |

The tensile strength test demonstrated that adhesion remained significantly better in samples in which the surface of the roughened steel slab was passivated using nitric acid prior to rubber lining than in the samples of the comparative example. Further, the adhesion was only slightly lower than in samples of the comparative test which were not immersed in sulphuric acid solution. The temperature during the immersion did not appear to have a significant effect on adhesion.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for manufacturing a process apparatus for moving liquid in high temperature liquid immersion under an aggressive chemical environment and dynamic stress, wherein the process apparatus is an impeller, agitator or mixer, and wherein the method comprises the step of lining a process apparatus formed of stainless steel with rubber, **characterized in that** the method comprises the steps of
roughening a surface of the process apparatus to a roughness of at least 10 µm Rz; and
forming a passivation layer on the roughened surface of the process apparatus in an acid bath prior to lining the process apparatus comprising the passivation layer with rubber.

2. The method according to claim 1, wherein a surface of the process apparatus is roughened by shot peening prior to forming the passivation layer on the roughened surface of the process apparatus.

3. The method according to claim 1 or 2, wherein a surface of the process apparatus is roughened to a roughness of at least 15 µm Rz, or at least 20 µm Rz, prior to forming the passivation layer on the roughened surface of the process apparatus.

4. The method according to any one of claim 1 - 3, wherein a primer and/or an adhesive is applied on the passivation layer prior to lining the process apparatus comprising the passivation layer with rubber.

5. The method according to any one of claims 1 - 4, wherein the acid bath is a nitric acid bath or a citric acid bath.

6. The method according to any one of claims 1 - 5, wherein the rubber is halobutyl rubber, preferably bromobutyl rubber.

7. The method according to any one of claims 1 - 6, wherein the stainless steel is super duplex stainless steel.

8. A process apparatus for moving liquid in high temperature liquid immersion under an aggressive chemical environment and dynamic stress, which is an impeller, agitator or mixer, and wherein the process apparatus (1) is formed of stainless steel, **characterized in that** a surface of the process apparatus is roughened to a roughness of at least 10 µm Rz, and the process apparatus comprises a passivation layer (2) on the roughened surface of the stainless steel, and a rubber lining (3) on the passivation layer.

9. The process apparatus according to claim 8, wherein the surface of the process apparatus is roughened to a roughness of at least 15 µm Rz, or at least 20 µm Rz.

10. The process apparatus according to claim 8 or 9, wherein it comprises a layer of a primer and/or a layer of an adhesive between the passivation layer (2) and the rubber lining (3).

11. The process apparatus according to any one of claims 8 - 10, wherein the rubber is halobutyl rubber, preferably bromobutyl rubber.

12. The process apparatus according to any one of claims 8 - 11, wherein the stainless steel is super duplex stainless steel.

13. The process apparatus according to any one of claims 8 - 12 obtainable by the method according to any one of claims 1 - 7.

## Patentansprüche

1. Verfahren zur Herstellung einer Prozessapparatur zum Bewegen von Flüssigkeit bei Hochtemperatur-Flüssigkeitsimmersion unter einer aggressiven chemischen Umgebung und dynamischer Belastung, wobei die Prozessapparatur ein Rührwerkzeug, Rührapparat oder Mischer ist, und wobei das Verfahren den Schritt des Auskleidens einer aus Edelstahl gebildeten Prozessapparatur mit Gummi umfasst,
**dadurch gekennzeichnet, dass** das Verfahren die Schritte umfasst:
Aufrauen einer Oberfläche der Prozessapparatur auf eine Rautiefe von mindestens 10 µm Rz; und
Bilden einer Passivierungsschicht auf der aufgerauten Oberfläche der Prozessapparatur in einem Säurebad vor dem Auskleiden der Prozessapparatur, das die Passivierungsschicht mit Gummi umfasst.

2. Verfahren nach Anspruch 1, wobei eine Oberfläche der Prozessapparatur vor dem Bilden der Passivierungsschicht auf der aufgerauten Oberfläche der Prozessapparatur durch Kugelstrahlen aufgeraut wird.

3. Verfahren nach Anspruch 1 oder 2, wobei eine Oberfläche der Prozessapparatur vor dem Bilden der Passivierungsschicht auf der aufgerauten Oberfläche der Prozessapparatur auf eine Rautiefe von mindestens 15 µm Rz oder mindestens 20 µm RZ aufgeraut wird.

4. Verfahren nach einem der Ansprüche 1 bis 3, wobei ein Grundiermittel und/oder ein Klebstoff auf die Passivierungsschicht vor dem Auskleiden der Prozessapparatur, das die Passivierungsschicht mit Gummi umfasst, aufgebracht wird.

5. Verfahren nach einem der Ansprüche 1 bis 4, wobei das Säurebad ein Salpetersäurebad oder ein Zitronensäurebad ist.

6. Verfahren nach einem der Ansprüche 1 bis 5, wobei der Gummi Halogenbutylkautschuk, vorzugsweise Brombutylkautschuk, ist.

7. Verfahren nach einem der Ansprüche 1 bis 6, wobei der Edelstahl Super-Duplex-Edelstahl ist.

8. Prozessapparatur zum Bewegen von Flüssigkeit bei Hochtemperatur-Flüssigkeitsimmersion unter einer aggressiven chemischen Umgebung und dynamischer Belastung, welche ein Rührwerkzeug, Rührapparat oder Mischer ist, und wobei die Prozessapparatur (1) aus Edelstahl gebildet ist,
**dadurch gekennzeichnet, dass**
eine Oberfläche der Prozessapparatur auf eine Rautiefe von mindestens 10 µm Rz aufgeraut ist und die Prozessapparatur eine Passivierungsschicht (2) auf der aufgerauten Oberfläche des Edelstahls und eine Gummierung (3) auf der Passivierungsschicht einschließt.

9. Prozessapparatur nach Anspruch 8, wobei die Oberfläche der Prozessapparatur auf eine Rautiefe von mindestens 15 µm Rz oder mindestens 20 µm Rz aufgeraut ist.

10. Prozessapparatur nach Anspruch 8 oder 9, wobei sie eine Schicht aus einem Grundiermittel und/oder eine Schicht aus einem Klebstoff zwischen der Passivierungsschicht (2) und der Gummierung (3) einschließt.

11. Prozessapparatur nach einem der Ansprüche 8 bis 10, wobei der Gummi Halogenbutylkautschuk, vorzugsweise Brombutylkautschuk, ist.

12. Prozessapparatur nach einem der Ansprüche 8 bis 11, wobei der Edelstahl Super-Duplex-Edelstahl ist.

13. Prozessapparatur nach einem der Ansprüche 8 bis 12, erreichbar durch das Verfahren gemäß einem der Ansprüche 1 bis 7.

## Revendications

1. Procédé de fabrication d'un appareil de traitement destiné à déplacer un liquide en immersion liquide à haute température sous atmosphère chimique agressive et contrainte dynamique, dans lequel l'appareil de traitement est une roue, un agitateur ou un mélangeur, et dans lequel le procédé comprend l'étape consistant à garnir un appareil de traitement formé d'acier inoxydable avec du caoutchouc, **caractérisé en ce que** le procédé comprend les étapes consistant à
conférer de la rugosité à une surface de l'appareil de traitement jusqu'à obtenir une rugosité d'au moins 10 µm Rz ; et
former une couche de passivation sur la surface rendue rugueuse de l'appareil de traitement dans un bain d'acide avant de garnir l'appareil de traitement comprenant la couche de passivation avec du caoutchouc.

2. Procédé selon la revendication 1, dans lequel on rend une surface de l'appareil de traitement rugueuse par grenaillage avant de former la couche de passivation sur la surface rendue rugueuse de l'appareil de traitement.

3. Procédé selon la revendication 1 ou 2, dans lequel on confère de la rugosité à une surface de l'appareil de traitement jusqu'à obtenir une rugosité d'au moins 15 µm Rz, ou d'au moins 20 µm Rz, avant de former la couche de passivation sur la surface rendue rugueuse de l'appareil de traitement.

4. Procédé selon l'une quelconque des revendications 1 à 3, dans lequel on applique un apprêt et/ou un adhésif sur la couche de passivation avant de garnir l'appareil de traitement comprenant la couche de passivation avec du caoutchouc.

5. Procédé selon l'une quelconque des revendications 1 à 4, dans lequel le bain d'acide est un bain d'acide nitrique ou un bain d'acide citrique.

6. Procédé selon l'une quelconque des revendications 1 à 5, dans lequel le caoutchouc est un caoutchouc d'halobutyle, de préférence un caoutchouc de bromobutyle.

7. Procédé selon l'une quelconque des revendications 1 à 6, dans lequel l'acier inoxydable est un acier inoxydable superduplex.

8. Appareil de traitement destiné à déplacer un liquide en immersion liquide à haute température sous atmosphère chimique agressive et contrainte dynamique, qui est une roue, un agitateur ou un mélangeur, et dans lequel l'appareil de traitement (1) est formé d'acier inoxydable, **caractérisé en ce que** l'on confère de la rugosité à une surface de l'appareil de traitement jusqu'à obtenir une rugosité d'au moins 10 µm Rz, et l'appareil de traitement comprend une couche de passivation (2) sur la surface rendue rugueuse de l'acier inoxydable, et une garniture de caoutchouc (3) sur la couche de passivation.

9. Appareil de traitement selon la revendication 8, dans lequel on confère de la rugosité à la surface de l'appareil de traitement jusqu'à obtenir une rugosité d'au moins 15 µm Rz ou d'au moins 20 µm Rz.

10. Appareil de traitement selon la revendication 8 ou 9, dans lequel l'appareil comprend une couche d'un apprêt et/ou une couche d'un adhésif entre la couche de passivation (2) et la garniture de caoutchouc (3).

11. Appareil de traitement selon l'une quelconque des revendications 8 à 10, dans lequel le caoutchouc est un caoutchouc d'halobutyle, de préférence un caoutchouc de bromobutyle.

12. Appareil de traitement selon l'une quelconque des revendications 8 à 11, dans lequel l'acier inoxydable est un acier inoxydable superduplex.

13. Appareil de traitement selon l'une quelconque des revendications 8 à 12, pouvant être obtenu au moyen du procédé selon l'une quelconque des revendications 1 à 7.
